# EUROPEAN PATENT APPLICATION

(11) **EP 3 951 906 A1**
(43) Date of publication of application: **09.02.2022**
(21) Application number: 20782827.8
(22) Date of filing: 26.03.2020
(51) Int. Cl.: H01M 2/02, H01M 2/10

(54) **LITHIUM ION BATTERY STACK**

(30) Priority: 29.03.2019 JP 2019066266
(71) Applicant: Mitsui Chemicals, Inc., Tokyo 105-7122 (JP)
(72) Inventor: YAMAMOTO, Shinji, Sodegaura-shi, Chiba 299-0265 (JP); SUGIHARA, Yuri, Sodegaura-shi, Chiba 299-0265 (JP)
(74) Representative: J A Kemp LLP
(86) International application number: PCT/JP2020/013794
(87) International publication number: WO 2020/203684

(57) **Abstract**

A lithium-ion battery stack that is a layered body includes: a plurality of lithium-ion batteries layered directly or with other layers therebetween; and one or more self-extinguishing layers.

## Description

### Technical Field

The present disclosure relates to a lithium-ion battery stack.

### Background Art

Conventionally, lithium-ion batteries have been attracting attention because of having high energy density and high output characteristics. Particularly for power supplies for electric vehicles, large storage batteries, or the like, lithium-ion battery stacks with a stack structure in which a plurality of lithium-ion batteries are layered directly or with other layers in between are employed.

Because of the high energy density and high output characteristics of lithium-ion batteries, when an internal short circuit occurs, a large current flows, causing rapid heat generation and, in the worst case, lithium ignition. To prevent such a problem, a cooling system has been installed outside a battery to reduce the heat generated, resulting in an increase in the overall size and weight of the battery.

To address this, an electrochemical device in which a predetermined fire extinguishing agent sheet is provided mainly on one or both sides of a separator of an electrode layered body (battery element) in a lithium-ion battery, and in which a fire caused by lithium ignition can be suppressed by initial fire extinguishing while ensuring the downsizing and weight reduction of the entire battery has been proposed in recent years (see, for example, Patent Document 1).

Patent documents 2 to 4 disclose a lithium-ion battery in which a battery stack composed of a plurality of batteries each containing a battery element inside an outer packaging film is further housed in a battery container (battery pack), and a fire extinguishing agent is arranged between the above-described battery stack and the battery container or in the battery container itself.
Patent Document 1: Japanese Patent No. 6431147
Patent Document 2: Japanese Patent Application Laid-Open (JP-A) No. 2009-99301
Patent Document 3: JP-A No. 2009-99305
Patent Document 4: JP-ANo. 2009-99322

### SUMMARY OF INVENTION

### Technical Problem

The technique described in Patent Document 1 above is excellent in terms of making lithium-ion batteries smaller and lighter and enabling initial fire extinguishing, yet there is still room for improvement.

Specifically, a predetermined fire extinguishing agent sheet is arranged inside an electrode layered body, specifically for each separator that is layered, which may reduce the production efficiency of the electrode layered body and in turn a resulting lithium-ion battery. Such a reduction in the production efficiency also has a considerable impact on production of a stack structure using a plurality of lithium-ion batteries (that is, production of a lithium-ion battery stack).

In techniques described in Patent Documents 2 to 4 above, a fire extinguishing agent is arranged outside a battery stack, and since the agent only acts after a battery container containing the battery stack has been damaged, it is difficult to prevent spread of fire inside the battery container. Therefore, for the techniques described in Patent Documents 2 to 4 above, a technique capable of achieving initial fire extinguishing inside a battery container (that is, initial fire extinguishing of a lithium-ion battery) is needed.

The disclosure was made in view of the above-described conventional circumstances, and is aimed at providing a lithium ion battery stack in which a plurality of lithium ion batteries are layered directly or with other layers therebetween, which can realize initial fire extinguishing of the lithium ion batteries and has excellent production efficiency.

### Solution to Problem

Means for solving the above-described problems includes the following aspects.
<1> A lithium-ion battery stack that is a layered body including: a plurality of lithium-ion batteries layered directly or with other layers therebetween; and one or more self-extinguishing layers.
<2> The lithium-ion battery stack according to <1>, wherein at least one of the one or more self-extinguishing layers is arranged between two adjacent lithium-ion batteries in the plurality of lithium-ion batteries.
<3> The lithium-ion battery stack according to <1> or <2>, wherein at least one of the one or more self-extinguishing layers has at least one of: a function of trapping radicals involved in combustion, a function of blocking a combustion supporting material, or a function of absorbing heat and diluting a combustion supporting material.
<4> The lithium-ion battery stack according to any one of <1> to <3>, wherein at least one of the one or more self-extinguishing layers has a shape retention property.
<5> The lithium-ion battery stack according to any one of <1> to <4>, wherein at least one of the one or more self-extinguishing layers has an adhesive property.
<6> The lithium-ion battery stack according to any one of <1> to <5>, wherein:
   at least one of the one or more self-extinguishing layers is arranged between two adjacent lithium-ion batteries in the plurality of lithium-ion batteries, and
   the layered body further includes an adhesive layer between at least one of the two adjacent lithium-ion batteries and a self-extinguishing layer arranged between the two adjacent lithium-ion batteries.
<7> The lithium-ion battery stack according to any one of <1> to <6>, wherein:
   at least one of the one or more self-extinguishing layers is arranged between two adjacent lithium-ion batteries in the plurality of lithium-ion batteries, and
   the layered body further includes a vibration-absorbing layer between at least one of the two adjacent lithium-ion batteries and a self-extinguishing layer arranged between the two adjacent lithium-ion batteries.
<8> The lithium-ion battery stack according to any one of <1> to <7>, wherein at least one of the plurality of lithium-ion batteries includes an internal-extinguishing layer.

### Advantageous Effects of Invention

According to the disclosure, a lithium ion battery stack in which a plurality of lithium ion batteries are layered directly or with other layers in between, which can realize initial fire extinguishing of the lithium ion batteries and has excellent production efficiency is provided.

### BRIEF DESCRIPTION OF DRAWINGS

Fig. 1 is a sectional view illustrating a first embodiment of the lithium-ion battery stack of the disclosure.
Fig. 2 is a sectional view illustrating a second embodiment of the lithium-ion battery stack of the disclosure.
Fig. 3 is a perspective view illustrating a lithium-ion battery in a state in which one portion of the battery is torn.
Fig. 4 is a partial sectional view of a housing portion in an outer packaging of the lithium-ion battery illustrated in Fig. 3.
Fig. 5 is a graph illustrating results of a nail penetration test in Example 1.
Fig. 6 is a graph illustrating results of a nail penetration test in Comparative Example 1.

### DESCRIPTION OF EMBODIMENTS

Herein, the numerical range expressed by using "from A to B" means a range including numerical values A and B as a lower limit value and an upper limit value.

Herein, the amount of each component in a composition means the total amount of the plurality of substances present in the composition, unless otherwise specified, when there is more than one substance corresponding to each component in the composition.

The lithium-ion battery stack of the disclosure is a layered body including a plurality of lithium-ion batteries layered directly or with other layers in between, and a single or plurality of self-extinguishing layers.

The lithium-ion battery stack of the disclosure can realize initial fire extinguishing of lithium-ion batteries and has excellent production efficiency.

Specifically, since the lithium-ion battery stack of the disclosure includes a self-extinguishing layer in a layered body, which is the lithium-ion battery stack of the disclosure itself, initial fire extinguishing of the lithium-ion battery can be more realized than when a fire extinguishing agent is arranged outside the lithium-ion battery stack (such as in a battery container housing a lithium-ion battery stack, or between the above-described battery container and lithium-ion battery stack) (see, for example, Patent Documents 2 to 4). For example, even when lithium in a lithium-ion battery ignites, a self-extinguishing layer that is arranged in a layered body, which is a lithium-ion battery stack itself, can realize initial fire extinguishing of the lithium-ion battery.

Furthermore, since the lithium-ion battery stack of the disclosure has a simple structure with a self-extinguishing layer interposed in a layered body, which is the lithium-ion battery stack of the disclosure itself, decrease in production efficiency of an electrode layered body and a lithium-ion battery can be suppressed compared to a technique of arranging a fire extinguishing agent sheet inside an electrode layered body, specifically, for each separator layered (see, for example, Patent Document 1), and in turn, a decrease in the production efficiency of the lithium-ion battery stack can be suppressed (in other words, the production efficiency of the lithium-ion battery stack is excellent).

The lithium-ion battery stack of the disclosure not only can realize initial fire extinguishing of a lithium-ion battery, but also obtains an effect of suppressing ignition itself of the lithium-ion battery.

In the lithium-ion battery stack (layered body) of the disclosure, only one self-extinguishing layer may be included, or two or more self-extinguishing layers may be included.

In the lithium-ion battery stack (layered body) of the disclosure, the self-extinguishing layer may be arranged anywhere in the layered body.

Specifically, the self-extinguishing layer:
may be arranged between two adjacent lithium-ion batteries of a plurality of lithium-ion batteries,
may be arranged further toward an outer side of at least one of the two outermost lithium-ion batteries in the plurality of lithium-ion batteries, or
may be arranged both between the above-described two adjacent lithium-ion batteries and at an outer side of at least one of the two outermost lithium-ion batteries.

Here, between two adjacent lithium-ion batteries of a plurality of lithium-ion batteries means, when the number of lithium-ion batteries in a lithium-ion battery stack is two, between these two lithium-ion batteries, and when the number of lithium-ion batteries in a lithium-ion battery stack is n (n is an integer of three or more), at least one location among " between two adjacent lithium-ion batteries" that exist at n-1 locations.

When a self-extinguishing layer is arranged further outsides the two lithium-ion batteries, which are the outermost layers, the layer may be arranged at only one of the above-described outer (two) locations, or at both locations.

A preferable aspect of the lithium-ion battery stack of the disclosure is
an aspect in which at least one of the above-described single or the plurality of self-extinguishing layers is arranged between two adjacent lithium-ion batteries in the plurality of lithium-ion batteries.

According to this aspect, initial fire extinguishing of lithium-ion batteries can be more effectively realized, and propagation of combustion between two adjacent lithium-ion batteries can be more effectively suppressed.

In this aspect, a single self-extinguishing layer may be arranged between two adjacent lithium-ion batteries, or a plurality of self-extinguishing layers (such as the self-extinguishing layer A and self-extinguishing layer B in the example described below) may be arranged. The above-described plurality of self-extinguishing layers may be adjacent to each other (that is, layered) or not adjacent to each other.

At least one of a single or a plurality of self-extinguishing layers preferably has at least one of a function of trapping radicals involved in combustion (hereinafter, also referred to as "radical trapping function"), a function of blocking combustion supporting materials (hereinafter, also referred to as "combustion supporting material blocking function"), and a function of absorbing heat and diluting combustion supporting materials (hereinafter, also referred to as "heat absorption and dilution function").

In cases in which at least one of the single or the plurality of self-extinguishing layers has at least one of the above-described functions, even when a fire occurs in the lithium-ion battery, the fire is extinguished in an extremely short time, and catching fires or spreading fires are effectively suppressed, and therefore initial fire extinguishing of the lithium-ion battery can be more effectively achieved.

Due to realization of at least one of the above-described functions, an effect of suppressing ignition itself before catching fire can also be obtained in lithium-ion batteries.

The above-described radical trapping function preferably traps O radicals, H radicals, and OH radicals, which are chain carriers in a chain reaction of combustion.

The above-described combustion supporting material blocking function is preferably a function to block supply of combustion supporting material to a combustion field.

The above-described heat absorption and dilution function is preferably a function of cooling a combustion field by an endothermic reaction (such as melting, sublimation, or decomposition) and diluting a combustion supporting material (such as oxygen or oxygen supply) and/or a combustible (such as a combustible gas) by generating a gas (such as a non-combustible gas or a flame-retardant gas) and/or an aerosol.

The thickness of a self-extinguishing layer depends on the size of a lithium-ion battery, the number of layers of the lithium-ion battery, and the like, and is preferably from 20 µm to 1,000 µm. When the thickness of the self-extinguishing layer is from 20 µm to 1,000 µm, a superior fire extinguishing performance can be exhibited.

The thickness of self-extinguishing layer herein means, in cases in which a plurality of self-extinguishing layers are layered, the thickness of one self-extinguishing layer among the plurality of self-extinguishing layers (the same applies hereinafter).

At least one of a single or a plurality of self-extinguishing layers preferably has a shape retention property.

When at least one of the single or the plurality of self-extinguishing layers has a shape retention property, the handling properties of the lithium-ion battery becomes favorable, and layering and positioning operations become easier.

From the viewpoint of further improving the shape retention property of a self-extinguishing layer, the thickness of the self-extinguishing layer is preferably 500 µm or more, and more preferably from 500 µm to 1000 µm.

At least one of a single or a plurality of self-extinguishing layers preferably has an adhesive property.

When at least one of the single or the plurality of self-extinguishing layers have an adhesive property, it is easier to produce a lithium-ion battery stack.

The lithium-ion battery stack (layered body) of the disclosure further preferably includes an adhesive layer between at least one of the above-described two adjacent lithium-ion batteries and a self-extinguishing layer arranged between the above-described two adjacent lithium-ion batteries.

A lithium-ion battery stack in an aspect that includes an adhesive layer can be produced by using, as a member, an integral piece in which a lithium-ion battery and a self-extinguishing layer are adhered via the adhesive layer. As a result, when a lithium-ion battery stack includes an adhesive layer, handling properties of a member used for producing a lithium-ion battery stack become more favorable, and the production efficiency of the lithium-ion battery stack is further improved.

Furthermore, when a lithium-ion battery stack includes an adhesive layer, misalignment or collapse of a lithium-ion battery can be more effectively suppressed when the lithium-ion battery stack is subjected to vibration.

The lithium-ion battery stack (layered body) of the disclosure preferably further includes a vibration-absorbing layer (that is, a layer that absorbs vibrations) between at least one of the above-described two adjacent lithium-ion batteries and a self-extinguishing layer arranged between the above-described two adjacent lithium-ion batteries.

When the lithium-ion battery stack of the disclosure includes a vibration-absorbing layer, misalignment or collapse of a lithium-ion battery can be more effectively suppressed when the lithium-ion battery stack is subjected to vibration.

In the lithium-ion battery stack of the disclosure, at least one of a plurality of lithium-ion batteries preferably includes an internal-extinguishing layer.

This can realize more effective initial fire extinguishing of a lithium-ion battery.

Here, the internal-extinguishing layer means a self-extinguishing layer provided inside a lithium-ion battery.

The internal-extinguishing layer is preferably provided in an outer packaging in a lithium-ion battery having a structure in which a lithium-ion battery element is housed in the outer packaging.

When the outer packaging has a layered structure, the internal-extinguishing layer is preferably provided as one of layers for forming the above-described layered structure.

In a lithium-ion battery in an aspect including an internal-extinguishing layer, a single internal-extinguishing layer may be arranged, or a plurality of internal-extinguishing layers may be arranged.

The above-described plurality of internal-extinguishing layers may be adjacent to each other (that is, layered) or may not be adjacent to each other.

The thickness of an internal-extinguishing layer depends on the size of a battery element, the number of layers in the battery element, and the like, and is preferably from 20 to 1,000 µm. When the thickness of the internal-extinguishing layer is from 20 to 1,000 µm, a superior fire-extinguishing performance can be exhibited.

The thickness of an internal-extinguishing layer herein means, when a plurality of internal-extinguishing layers are layered, the thickness of one internal-extinguishing layer among the plurality of internal-extinguishing layers.

Embodiments of the lithium-ion battery stack of the disclosure is described in detail below with reference to the drawings. Hereinafter, as a general rule, elements and members that exhibit substantially the same functions will be marked with the same sign, and their descriptions will be omitted.

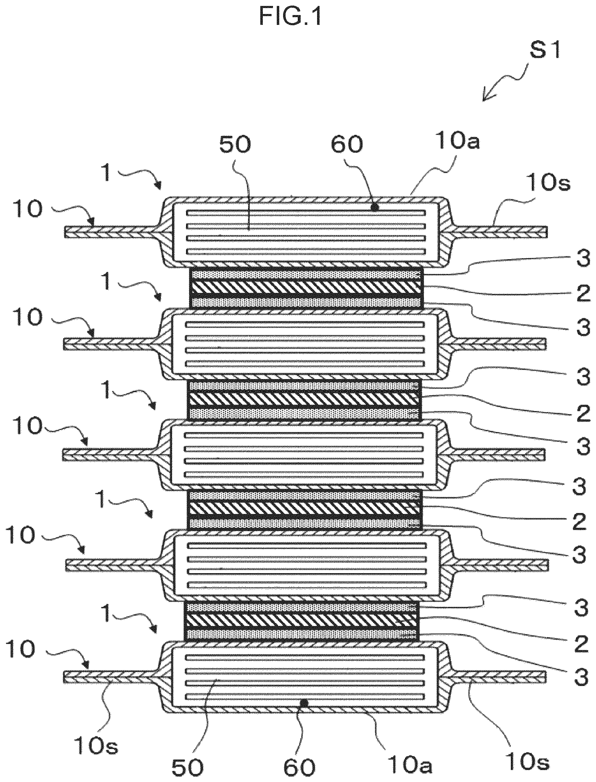

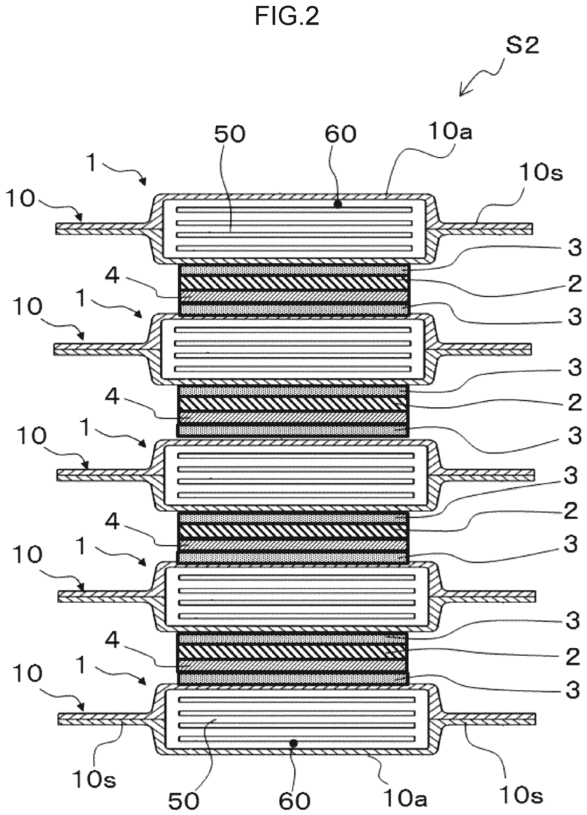

Figs. 1 and 2 are diagrams illustrating a first embodiment and a second embodiment of the lithium-ion battery stack of the disclosure. In each diagram, the thickness of each layer is exaggerated for convenience of understanding and a state of layering in the vertical direction is illustrated, but an actual relationship between the thickness of each layer and the number of layers and the direction of layering may differ from examples illustrated in the diagrams.

The lithium-ion battery stack S1 of the first embodiment illustrated in Fig. 1 has a structure in which a plurality of lithium-ion batteries 1 are layered, and a self-extinguishing layer 2 is provided between lithium-ion batteries 1 adjacent to each other. A self-extinguishing layer 2 has at least one of the above-described radical trapping function, the above-described combustion supporting material blocking function, and the above-described heat absorption and dilution function.

This self-extinguishing layer 2 can extinguish fire in an extremely short time even when a fire occurs in the lithium-ion battery 1, due to realization of the above-described functions, and can effectively suppress catching fires or spreading fires.

Due to realization of the above-described functions of the self-extinguishing layer 2, an effect of suppressing ignition itself of the lithium-ion battery 1 can also be obtained.

The specific materials of the self-extinguishing layer 2 will be described in detail below.

A lithium-ion battery stack S1 may include a plurality of self-extinguishing layers 2 (such as a layered body in which a plurality of self-extinguishing layers 2 are layered) between lithium-ion batteries 1 adjacent to each other.

In the lithium-ion battery stack S1 of the illustrated example, a self-extinguishing layer 2 includes adhesive layers 3 interposed between two adjacent lithium-ion batteries 1, thereby ensuring adhesive property.

However, when the self-extinguishing layer 2 contains an adhesive component (that is, when the self-extinguishing layer 2 itself has adhesive property), the adhesive layer 3 may be omitted.

The adhesive layer 3 is formed by an adhesive such as an isocyanate adhesive, an acrylic adhesive, or an epoxy adhesive.

The adhesive layer 3 more effectively suppresses misalignment of lithium-ion batteries 1 by vibration or collision of lithium-ion batteries 1 by vibration.

Examples of a variation of the lithium-ion battery stack S1 of the first embodiment include an aspect in which a self-extinguishing layer 2 (and an adhesive layer 3 if necessary) is added to at least one of the outside (two locations) of the two lithium-ion batteries 1, which are the outermost layers, with respect to the lithium-ion battery stack S1 of the first embodiment.

The lithium-ion battery stack S2 of a second embodiment illustrated in Fig. 2 has the same structure as the first embodiment, in which a plurality of lithium-ion batteries 1 are layered, and a self-extinguishing layer 2 is provided between lithium-ion batteries 1 adjacent to each other.

In addition, the lithium-ion battery stack S2 includes a vibration-absorbing layer 4 for absorbing vibrations.

In the lithium-ion battery stack S2, the vibration-absorbing layer 4 is provided on one side of the self-extinguishing layer 2. The vibration-absorbing layer 4 may be provided on both sides of the self-extinguishing layer 2.

The lithium-ion battery stack S2 of the illustrated example includes a vibration-absorbing layer 4 and an adhesive layer 3 between the self-extinguishing layer 2 and the lithium-ion battery 1 adjacent to the lower side of the self-extinguishing layer 2. The vibration-absorbing layer 4 is arranged between the self-extinguishing layer 2 and the adhesive layer 3.

The adhesive layer 3 and the vibration-absorbing layer 4 may be provided as a single layer that has both adhesive property and vibration-absorbing properties by appropriately selecting the materials.

The vibration-absorbing layer 4 is formed from a material represented by polyurethane, a styrene thermoplastic layer resin, or the like.

The vibration-absorbing layer 4 more effectively suppresses internal shorts and/or electrode peeling due to misalignment of lithium-ion batteries 1 by vibration, misalignment of electrodes inside a battery, and the like.

The lithium-ion battery stack S2 provided with such a vibration-absorbing layer 4 is extremely useful for applications such as automotive power supplies.

Examples of a variation of the lithium-ion battery stack S2 of the second embodiment include an aspect in which a self-extinguishing layer 2 (and at least one of an adhesive layer 3 and a vibration-absorbing layer 4, if necessary) is added to at least one of the outside (two locations) of the two lithium-ion batteries 1, which are the outermost layers, with respect to the lithium-ion battery stack S2 of the second embodiment.

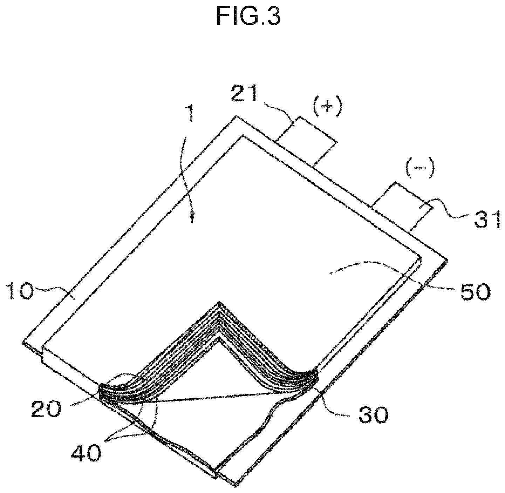

The lithium-ion battery 1 in the first and second embodiments described above includes an outer packaging 10, a battery element 50, and an electrolyte solution 60, as illustrated in Figs. 1 to 3.

The outer packaging 10 includes a housing portion 10a formed by drawing, and a sealing portion 10s formed by heat sealing.

The sealing portion 10s is formed, in detail, by heat sealing edges of the outer packaging 10 while the battery element 50 and the electrolyte solution 60 are contained in the housing portion 10a of the outer packaging 10.

The lithium-ion battery 1 is a flat lithium-ion battery that has a roughly rectangular shape in plan view. This allows easy layering of lithium-ion batteries 1.

The battery element 50 is formed by sequentially layering a positive electrode 20, a separator 40, and a negative electrode 30, and, if necessary, winding these together.

A positive electrode terminal 21 is connected to the positive electrode 20, and a negative electrode terminal 31 is connected to the negative electrode 30. These positive electrode terminal 21 and negative electrode terminal 31 are pulled out from a part of the sealing portion 10s in the outer packaging 10.

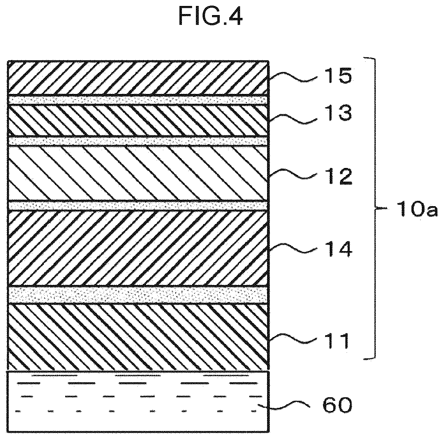

Fig. 4 is a partial sectional view of a housing portion 10a of the outer packaging 10 of the lithium-ion battery 1. Fig. 4 also illustrates an electrolyte solution 60 contained in the housing portion 10a.

The housing portion 10a of the outer packaging 10 has a layered structure in which a thermal adhesive layer 11, an internal-extinguishing layer 14, a metal layer 12, a gas barrier layer 13, and a toughness layer 15 are arranged in this order when viewed from the electrolyte solution 60 side, and internal adhesive layers are each interposed between the layers.

The thermal adhesive layer 11 is a layer that contributes to forming a sealing portion 10s by heat sealing.

The thermal adhesive layer 11 preferably has a cushioning property.

The thermal adhesive layer 11 is in direct contact with the electrolyte solution 60, and thus preferably has resistance to the electrolyte solution.

The internal-extinguishing layer 14, like the self-extinguishing layer 2 described above, has at least one of a radical trapping function, a combustion supporting material blocking function, and a heat absorption and dilution function.

Both of the lithium-ion battery stacks S1 and S2 include the internal-extinguishing layer 14 in the outer packaging 10, and thus have a two-stage fire-extinguishing function using the self-extinguishing layer 2 and the internal-extinguishing layer 14. As a result, both stacks have superior fire extinguishing and ignition suppressing effects.

The internal-extinguishing layer 14 is layered on the thermal adhesive layer 11, and therefore is not in direct contact with the electrolyte solution 60. As a result, effects on battery properties due to elution of a component of the internal-extinguishing layer 14 are suppressed.

The housing portion 10a of the outer packaging 10 may include a plurality of internal-extinguishing layers 14 (such as a layered body in which a plurality of internal-extinguishing layers 14 are layered).

The metal layer 12 is mainly responsible for gas barrier and shape retention properties.

The gas barrier layer 13 has a gas barrier function.

In addition to the gas barrier function, the gas barrier layer 13 preferably has a resistance to penetration by nails, or the like (that is, penetration resistance).

The toughness layer 15 is a layer formed of a high-toughness resin.

The toughness layer 15 improves the penetration resistance, impact resistance, or the like of the outer packaging film, and further suppresses damage caused by external stress.

Each of the lithium-ion battery stacks S1 and S2 having the above-described configuration is preferably produced by adhering a self-extinguishing layer 2 via an adhesive layer 3 (that is, an adhesive layer 3 and a vibration-absorbing layer 4) to the top surface of each of individual lithium-ion batteries 1 in advance, and then sequentially layering the lithium-ion batteries 1 to which the self-extinguishing layer 2 is adhered via the adhesive layer 3.

In this case, when the self-extinguishing layer 2 has a shape retention property, the lithium-ion battery 1 to which the self-extinguishing layer 2 is adhered has superior handling properties, and stacking and positioning operations are easier. As a result, the production efficiency of lithium-ion battery stacks can be improved more effectively.

When the thickness of the self-extinguishing layer 2 is 500 µm or more, the above-described effect is more effectively achieved.

Next, preferred aspects of each element that can be included in the lithium-ion battery stack of the disclosure will be described in detail.

### < Self-extinguishing Layer >

The self-extinguishing layer (for example, the self-extinguishing layer 2 described above) preferably contains at least one kind of extinguishing agent.

The extinguishing agent is preferably an agent having at least one of the above-described radical trapping function, the above-described combustion supporting material blocking function, and the above-described heat absorption and dilution function.

More specific examples of a preferable extinguishing agent include:
a radical trapping fire extinguishing agent having the above-described radical trapping function;
a combustion supporting material blocking fire extinguishing agent having the above-described combustion supporting material blocking function; and
a heat absorption and dilution fire extinguishing agent having the above-described heat absorption and dilution function.

More specific examples of the above-described combustion supporting material blocking fire extinguishing agents include:
a flame retardant resin fire extinguishing agent that is composed of a flame retardant resin and has a function of covering a combustion field with the flame retardant resin; and
a char-forming fire extinguishing agent that forms a thin film (char) when burned and has a function of covering a combustion field with the formed char.

The above-described extinguishing agents may be used in a mixture.

Examples of radical trapping fire extinguishing agents include:
a phosphorus compound such as ammonium dihydrogen phosphate, sodium phosphate, phosphate ester, trimethyl phosphite, red phosphorus, or phosphazene;
an alkali metal compound such as sodium bicarbonate, potassium bicarbonate, potassium oxide, tripotassium citrate, hydrate of sodium carbonate, or hydrate of potassium carbonate;
ammonium sulfate;
a halogen compound such as a bromine compound, a halide modified polymer, or a perhalogenated alkylsulfonic acid;
a hindered amine compound such as a hindered amine or a phenol-added hindered amine; and
an alkyl hydroquinone compound such as butyl hydroquinone.

Examples of the bromine compound include a brominated triazine and a brominated epoxy resin.

Examples of the perhalogenated alkyl sulfonic acid include a perfluoroalkyl sulfonic acid (for example, a perfluoroalkyl sulfonic acid containing a fully fluorinated linear alkyl group).

A radical trapping fire extinguishing agent is preferably used in combination with a fuel and an oxidizing agent. This allows adjustment of the fire extinguishing start temperature (temperature of generation of a potassium radical or the like) depending on the ignition temperature of the fuel, and earlier fire extinguishing is easily achieved.

The compounding ratio of the radical trap extinguishing agent, and the fuel and the oxidizing agent depends on the type of the radical trapping fire extinguishing agent and the fuel, and is preferably from 1 to 10 parts by mass of the total amount of the fuel and the oxidizing agent to 100 parts by mass of the radical trapping fire extinguishing agent. Such a range of the compounding ratio is particularly preferable to achieve both fire extinguishing performance and safety.

The fire extinguishing start temperature of the radical trapping fire extinguishing agent is preferably from 150 to 180°C considering the relationship with the initial fire extinguishing of fires caused by lithium metal.

Examples of the above-described fuels include dicyandiamide, nitroguanidine, guanidine nitrate, urea, melamine, melamine cyanurate, Avicel, guar gum, carboxyl methyl cellulose, sodium carboxyl methyl cellulose, potassium carboxyl methyl cellulose, ammonium carboxyl methyl cellulose, nitrocellulose, aluminum, boron, magnesium, magnalium, zirconium, titanium, titanium hydride, tungsten, and silicon.

Among them, a carboxymethyl cellulose-based fuel (for example, carboxymethyl cellulose, sodium carboxymethyl cellulose, potassium carboxymethyl cellulose, or ammonium carboxymethyl cellulose) can be preferably used.

Examples of the above-described oxidizing agents include potassium chlorate, sodium chlorate, strontium chlorate, ammonium chlorate, and magnesium chlorate.

The mixing ratio of the above-described fuel and the above-described oxidizing agent is preferably from 20:80 to 50:50 by mass, depending on the kinds of the fuel and the oxidizing agent and the configuration of a battery.

The fire extinguishing start temperature can be adjusted by mixing the above-described fuel, the above-described oxidizing agent, and the above-described radical trapping fire extinguishing agent in a ratio described above.

A self-extinguishing layer can be formed by sheet forming and drying while controlling the temperature below the fire extinguishing start temperature.

Examples of a flame retardant resin fire extinguishing agent among the combustion supporting material blocking fire extinguishing agents include a polyphenylene sulfide (PPS) resin, a polyimide (PI) resin, a rubber-based resin (for example, a styrene-butadiene rubber (SBR)).

When the self-extinguishing layer contains a flame retardant resin fire extinguishing agent, a self-extinguishing layer preferably further contains a radical trapping fire extinguishing agent. In this case, the flame retardant resin fire extinguishing agent shuts off supply of a combustion supporting material, and the radical trapping fire extinguishing agent traps a chain carrier of combustion and stops the combustion.

Examples of a char-forming fire extinguishing agent among the combustion supporting material blocking fire extinguishing agents include condensed phosphate ester, silicone powder, zinc borate, organic bentonite, melamine resin (MF), expanded graphite, polycarbonate (PC), and polystyrene carbonate.

Examples of the heat absorption and dilution fire extinguishing agent include:
a hydride such as calcium hydroxide, magnesium hydroxide, and aluminum hydroxide;
an alkali metal compound such as sodium bicarbonate, potassium bicarbonate, potassium oxide, sodium carbonate, and potassium carbonate;
ammonium dihydrogen phosphate; and
urea.

### < Adhesive Layer >

An adhesive layer (for example, the adhesive layer 3 described above) is formed by an adhesive such as an isocyanate adhesive, an acrylic adhesive, or an epoxy adhesive.

### • Isocyanate Adhesive

Isocyanate adhesives are adhesives that contain a polyisocyanate component.

Examples of a polyisocyanate component in an isocyanate adhesive include a polyisocyanate monomer, a polyisocyanate derivative, and an isocyanate group-terminated prepolymer.

Examples of a polyisocyanate monomer include a polyisocyanate such as an aromatic polyisocyanate, an aromatic-aliphatic polyisocyanate, an alicyclic polyisocyanate, and an aliphatic polyisocyanate.

Examples of aromatic polyisocyanates include tolylene diisocyanate (for example, 2,4- or 2,6-tolylene diisocyanate or a mixture thereof (TDI)), phenylenediisocyanate (for example, *m*-, *p*-phenylenediisocyanate or a mixture thereof), 4,4'-diphenyl diisocyanate, 1,5-naphthalene diisocyanate (NDI), diphenylmethane diisocyanate (for example, 4,4'-, 2,4'-, or 2,2'-diphenylmethane diisocyanate or a mixture thereof (MDI)), an aromatic diisocyanate such as 4,4'-toluidine diisocyanate (TODI) and 4,4'-diphenyl ether diisocyanate.

Examples of an aromatic aliphatic polyisocyanate include an aromatic aliphatic diisocyanate such as xylidene diisocyanate (for example, 1,3- or 1,4- xylidene diisocyanate or a mixture thereof (XDI)), tetramethylxylidene diisocyanate (for example, 1,3- or 1,4-tetramethylxylidene diisocyanate or a mixture thereof (TMXDI)), and *ω*,*ω*'-diisocyanate-1,4-diethylbenzene.

Examples of an alicyclic polyisocyanate include an alicyclic diisocyanate such as 1,3-cyclopentane diisocyanate, 1,3-cyclopentene diisocyanate, cyclohexanediisocyanate (for example, 1,4-cyclohexanediisocyanate, 1,3-cyclohexanediisocyanate), 3-isocyanatomethyl-3,5,5-trimethylcyclohexyl isocyanate (also known as isophorodiisocyanate (IPDI)), methylenebis(cyclohexylisocyanate) (for example, 4,4'-, 2,4'-, or 2,2'-methylenebis(cyclohexylisocyanate, a *Trans,Trans-, Trans,Cis-,* or *Cis,Cis*-form thereof, or a mixture thereof (H12MDI)), methylcyclohexane diisocyanate (for example, methyl-2,4-cyclohexane diisocyanate, or methyl-2,6-cyclohexane diisocyanate), norbornane diisocyanate (for example, a variety of isomers or a mixture thereof (NBDI)), and bis(isocyanatomethyl)cyclohexane (for example, 1,3- or 1,4-bis(isocyanatomethyl)cyclohexane or a mixture thereof (H6XDI)).

Examples of an aliphatic polyisocyanate include an aliphatic diisocyanate such as trimethylene diisocyanate, 1,2-propylene diisocyanate, butylene diisocyanate (for example, tetramethylene diisocyanate, 1,2-butylene diisocyanate, 2,3-butylene diisocyanate, 1,3-butylene diisocyanate), 1,5-pentamethylene diisocyanate (PDI), hexamethylene diisocyanate (HDI), 2,4,4- or 2,2,4-trimethylhexamethylene diisocyanate, and 2,6-diisocyanate-methyl caprate.

### • Acrylic Adhesive

Acrylic adhesives are adhesives that contain (meth)acrylic polymer.

Here, a (meth)acrylic polymer means a polymer containing at least one kind selected from the group consisting of a structural unit derived from acrylic acid, a structural unit derived from acrylic acid ester, a structural unit derived from methacrylic acid, and a structural unit derived from methacrylic acid ester.

A (meth)acrylic polymer preferably includes a group containing a carbonyl group and a hydrocarbon group adjacent to the carbonyl group.

The group containing a carbonyl group and a hydrocarbon group adjacent to the carbonyl group is preferably present in a side chain of the (meth)acrylic polymer from the viewpoint of improving the adhesive property and blocking resistance.

Examples of the group containing a carbonyl group and a hydrocarbon group adjacent to the carbonyl group include a group represented by Formula (I) below and a group represented by Formula (II) below. Among them, a group represented by Formula (II) below is preferable.

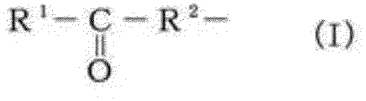

(In Formula (I), R¹ represents an alkyl group or a hydroxyl group having from 1 to 18 carbon atoms, and R² represents an alkylene group having from 1 to 4 carbon atoms or an aminoalkylene group having from 1 to 4 carbon atoms.

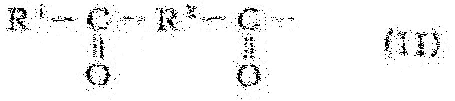

(In Formula (II), R¹ represents an alkyl group or a hydroxyl group having from 1 to 18 carbon atoms, and R² represents an alkylene group having from 1 to 4 carbon atoms or an aminoalkylene group having from 1 to 4 carbon atoms.

In Formula (I) and Formula (II), R¹ is an alkyl group or hydroxyl group having from 1 to 18 carbon atoms, and from the viewpoint of improving the adhesive property and blocking resistance, is preferably an alkyl group or hydroxyl group having from 1 to 12 carbon atoms, more preferably an alkyl group or hydroxyl group having from 1 to 6 carbon atoms, and still more preferably an alkyl group or hydroxyl group having from 1 to 4 carbon atoms. Specific examples of suitable alkyl groups include a methyl group, an ethyl group, an *n*-propyl group, an isopropyl group, an *n*-butyl group, an isobutyl group, and a *tert*-butyl group.

### < Vibration-absorbing Layer >

Examples of a vibration-absorbing layer include:
an elastic film containing a polyurethane resin and a rubber powder with a particle size of 1.0 mm or less; and
an elastic film composed of a styrene thermoplastic resin (for example, SEBS or SEEPS).

An elastic film containing a polyurethane resin and a rubber powder with a particle size of 1.0 mm or less is formed, for example, by mixing a main agent composed mainly of a urethane prepolymer containing an isocyanate group and a curing agent composed of an active hydrogen compound, an inorganic filler, a catalyst, and other auxiliary agents, and curing the mixture.

A urethane prepolymer containing an isocyanate group is obtained, for example, by reacting an organic polyisocyanate with a polyol as an active hydrogen compound.

Examples of an organic polyisocyanate as a raw material for a urethane prepolymer containing an isocyanate group include;
2,4-tolylene diisocyanate, 2,6-tolylene diisocyanate, or a mixture thereof (hereinafter abbreviated as TDI) (for example, TDI-80, a mixture in which the mass ratio [2,4-lylene diisocyanate/2,6-lylene diisocyanate] is 80/20, or TDI-65, a mixture in which the above-described mass ratio is 65/35);
crude tolylene diisocyanate;
metaphenyl diisocyanate;
diphenylmethane diisocyanate (MDI);
polymethylene polyphenyl polyisocyanate (crude MDI);
hexamethylene diisocyanate;
4,4'-dicyclohexylmethane diisocyanate; and
isophorone diisocyanate.

Organic polyisocyanates can be used singly, or in mixture of two or more kinds thereof.

Examples of a polyol as a raw material for a urethane prepolymer containing an isocyanate group include a polyether polyol, a polyester polyol, a polybutadiene polyol, castor oil, and a low molecular glycol.

Examples of a polyether polyol include polyoxyalkylene glycol and polyoxyalkylene triol.

Examples of a polyoxyalkylene glycol include:
polyoxyalkylene glycol containing at least one of an ethylene oxy group and a propylene oxy group; and
a polytetramethylene ether glycol.

Examples of a low molecular glycol include: ethylene glycol, diethylene glycol, propylene glycol, dipropylene glycol, tripropylene glycol, 1,3-butylene glycol, and 2,3-butylene glycol.

Polyols can be used singly or in a mixture of two or more kinds thereof.

The weight average molecular weight of the polyol is preferably from 75 to 10,000.

A urethane prepolymer containing an isocyanate group can be produced, for example, by heating an organic polyisocyanate and a polyol at from 80 to 100°C for several hours in a nitrogen stream according to a conventional method.

The equivalent ratio (NCO/OH) of isocyanate groups in organic polyisocyanate to hydroxy groups in polyol in producing a urethane prepolymer containing an isocyanate group is preferably from 2 to 20.

The amount of isocyanate groups in a urethane prepolymer containing isocyanate groups is, for example, from 1 to 15% by mass of the total amount of polymer.

Production of a urethane prepolymer containing an isocyanate group is preferably carried out in the presence of a catalyst.

Examples of the catalyst include a known amine and a known organometallic compound (for example, an organotin compound, and an organolead compound).

Examples of the organometallic compound include tin octoate, dibutyl tin dilaurate, lead octoate, and lead naphthenate.

Catalysts can be used singly or in a mixture of two or more kinds thereof.

The amount of catalyst used is preferably from 0.1 to 5% by mass of the total amount of a curing agent.

### < Outer Packaging >

An outer packaging (for example, the above-described outer packaging 10) preferably includes a thermal adhesive layer (for example, the above-described thermal adhesive layer 11), a metal layer (for example, the above-described metal layer 12), and a gas barrier layer (for example, the above-described gas barrier layer 13), and has a layered structure in which the thermal adhesive layer, the metal layer, and the gas barrier layer are arranged in the order described.

The layered structure of the outer packaging may further include an internal-extinguishing layer (for example, the internal-extinguishing layer 14 described above). The internal-extinguishing layer is preferably arranged between the thermal adhesive layer and the metal layer.

The layered structure of the outer packaging may further include a toughness layer (for example, the toughness layer 15 described above). The toughness layer is preferably arranged on the side opposite the side on which the thermal adhesive layer is arranged relative to the metal layer. The toughness layer is preferably arranged as the outermost layer and/or as a layer between the gas barrier layer and the metal layer, and more preferably as the outermost layer.

The outer packaging is preferably produced by molding and processing an outer packaging film for lithium-ion batteries having the above-described layered structure (hereinafter, also simply referred to as "outer packaging film").

### (Thermal Adhesive Layer)

The thermal adhesive layer is preferably a layer formed by at least one kind of thermoplastic resin.

When an outer packaging is produced using an outer packaging film having the above-described layered structure, the outer packaging is produced by bonding the outer packaging films to each other or the outer packaging films to electrode terminals by heat sealing to form a sealing portion. The thermal adhesive layer contributes to such formation of the sealing portion by heat sealing.

The thermal adhesive layer is preferably arranged on the side closest to a battery element. This can more effectively suppress contact between the internal-extinguishing layer and/or the metal layer and the electrolyte solution.

Examples of the thermoplastic resins include conventional known polyolefin resins. Examples of olefins used as raw materials for polyolefin resins include ethylene, propylene, 1-butene, 1-pentene, 3-methyl-1-butene, 1-hexene, 4-methyl-1-pentene, and 3-methyl-1-pentene. Among these, polypropylene is preferred from the viewpoint of sealing strength and flexibility of resins to be formed.

The above-described polyolefin resin may be a linear resin or a resin having a branched structure.

The above-described polyolefin resin may be obtained by single polymerization of one olefin or by copolymerization (for example, random copolymerization, block copolymerization, or graft copolymerization) of two or more olefins.

The melting point of the above-described thermoplastic resin is preferably from 100 to 170°C, more preferably from 100 to 135°C, and still more preferably from 100 to 120°C.

When the melting point of the thermoplastic resin is 100°C or higher, peeling of the thermally bonded portion (for example, the sealing portion described below) due to heat generation during charging of a lithium-ion battery is more suppressed.

When the melting point of the thermoplastic resin is 170°C or lower, thermal bonding is more easily performed at or below the fire extinguishing start temperature of a self-extinguishing layer.

As the melting point of the thermoplastic resin, the endothermic peak temperature of the DSC curve measured in the second temperature increase process (iii) can be adopted when about 10 mg of a sample is placed in an aluminum pan and differential scanning calorimetry (DSC) of the following processes (i) to (iii) is performed.
(i) The temperature is raised to 200°C at 100°C/min and held at 200°C for 5 minutes,
(ii) the temperature is lowered to -50°C at 10°C/min, and then
(iii) the temperature is raised to 200°C at 10°C/min.

The thickness of the thermal adhesive layer is preferably from 20 to 50 µm.

When the thickness of the thermal adhesive layer is 20 µm or more, a superior adhesive property can be obtained.

When the thickness of the thermal adhesive layer is 50 µm or less, a superior adhesive maintenance can be obtained.

### (Metal Layer)

The metal layer preferably has a function of preventing water vapor from infiltrating the interior of a lithium-ion battery from the outside.

For example, aluminum foil, stainless steel foil, nickel foil, or the like can be used as the metal layer.

From the viewpoint of the above-described function, the metal layer is preferably aluminum foil or stainless steel foil, and more preferably stainless steel foil.

The thickness of the metal layer is preferably from 15 to 100 µm.

When the thickness of the metal layer is 15 µm or more, a superior pinhole resistance is achieved.

When the thickness of the metal layer is less than 100 µm, a superior bending processability is achieved.

### (Gas Barrier Layer)

The gas barrier layer preferably has a function of preventing pinholes and other defects from occurring in the metal layer.

The material of the gas barrier layer can be, for example, a resin that has chemical resistance, toughness, impact resistance, and flexibility.

For example, an aliphatic polyamide such as nylon 6 or nylon 66 can be used as a resin to form the gas barrier layer.

The thickness of the gas barrier layer is preferably from 20 to 30 µm.

When the thickness of the gas barrier layer is 20 µm or more, a superior gas barrier property is achieved.

When the thickness of the gas barrier layer is 30 µm or less, a superior corrosion resistance is achieved.

### (Internal-extinguishing layer)

The internal-extinguishing layer (for example, the internal-extinguishing layer 14 described above) preferably contains at least one extinguishing agent.

A preferable aspect of a fire extinguishing agent that may be contained in the internal-extinguishing layer is the same as a preferable aspect of a fire extinguishing agent that may be contained in the self-extinguishing layer.

However, a fire extinguishing agent in the internal-extinguishing layer and a fire extinguishing agent in the self-extinguishing layer may be the same or different.

The preferable range of the thickness of the internal-extinguishing layer is as described above.

When the layered structure of an outer packaging includes an internal-extinguishing layer, the layered structure may include only one internal-extinguishing layer or may include two or more internal-extinguishing layers.

When the layered structure includes two or more internal-extinguishing layers, the two or more self-extinguishing layers may be adjacent to each other (that is, stacked) or may not be adjacent to each other.

### (Toughness Layer)

The toughness layer is preferably formed of a high-toughness resin, which improves the penetration resistance, impact resistance, and the like of an outer packaging film, and more effectively prevents a lithium-ion battery from being damaged by external stress.

When the outer packaging film includes a toughness layer, when a sealing portion is formed by heat sealing, peeling of the sealing portion caused by stress after heat sealing can be more suppressed.

Examples of the above-described high-toughness resin include an ultra-high molecular weight resin having a weight average molecular weight of 500,000 to 6,000,000, and more specifically include polypropylene, a polyethylene terephthalate resin, a polyethylene naphthalate resin, and a polycarbonate resin.

The thickness of the toughness layer depends on the required strength, and is preferably from 10 to 100 µm, and more preferably from 30 to 100 µm.

When the thickness of the toughness layer is 10 µm or more, a superior breakage resistance is achieved.

When the thickness of the toughness layer is less than 100 µm, superior bending processability and shape retention are achieved.

### (Preparation of Outer Packaging Film and Outer Packaging)

An outer packaging film used in producing an outer packaging can be prepared by a conventionally known method such as a dry lamination method, in which layers are layered using an adhesive, a thermal lamination method, in which a molten adhesive is sandwiched between layers, or the like, and the dry lamination method is preferable since the process can be carried out at room temperature.

The outer packaging (for example, the above-described outer packaging 10) is prepared, for example, by drawing an outer packaging film to form a housing portion (for example, the above-described housing portion 10a), stacking two drawn outer packaging films, and heat sealing edges together to form a sealing portion (for example, the above-described sealing portion 10s).

### < Lithium-ion Battery >

A lithium-ion battery contains: a battery element that includes a positive electrode, a negative electrode, and a separator that insulates the two electrodes; and an electrolyte solution (electrolyte).

The positive electrode and the negative electrode are respectively connected to the positive electrode terminal and the negative electrode terminal, which are current-carrying, and the tips of these terminals protrude outside the outer packaging film.

Here, "electrolyte solution (electrolyte)" refers to an electrolyte solution or an electrolyte.

### < Positive Electrode >

The positive electrode preferably includes a positive electrode active material and a positive electrode current collector, and may further include a conductive aid, a binder, and a solid electrolyte, and the like, as necessary.

The positive electrode active material is not particularly limited, and any known material can be used. Examples thereof include a lithium-containing composite oxide such as lithium cobaltate, lithium nickelate, lithium manganate, a spinel-type lithium composite oxide, or lithium titanate.

### < Negative Electrode >

The negative electrode preferably includes a negative electrode active material and a negative electrode current collector, and may further include a conductive aid, a binder, and a solid electrolyte, and the like, as necessary.

The negative electrode active material is not particularly limited, and any known material can be used. Examples thereof include a carbon material such as natural graphite, artificial graphite, or hard carbon, silicon (Si), and a silicon alloy.

### < Separator >

As a separator, any known separator can be used without any particular restriction. Examples of a separator that can be used include: a polymeric nonwoven fabric; a porous polymer film; and a sheet-like member made of heat-resistant fibers containing at least one of polyimide, glass, and ceramics. As a separator, a composite of these members (for example, a layered body obtained by layering these members) can also be used.

The separator preferably includes a porous polyolefin film.

### < Electrolyte Solution (Electrolyte) >

The electrolyte solution (electrolyte) is not particularly limited as long as the electrolyte solution (electrolyte) has lithium ion conductivity, and any known one can be used. Not only nonaqueous electrolyte, but also gel electrolyte, polymer electrolyte, inorganic solid electrolyte, or the like can be used.

Examples of the non-aqueous electrolyte include an electrolyte solution obtained by dissolving an Li electrolyte such as LiPF₆, LiBF₄, LiN(SO₂CF₃)₂, or LiN(SO₂CF₂CF₃)₂ in a mixed solvent of carbonates such as ethylene carbonate, propylene carbonate, dimethyl carbonate, and ethyl methyl carbonate.

Examples of the inorganic solid electrolyte include:
an oxide solid electrolyte such as a perovskite type oxide solid electrolyte such as (Li,La)TiO₃, or a NASICON type oxide solid electrolyte such as Li(Al,Ti)(PO₄)₃; and
a sulfide solid electrolyte such as Li₂S-P₂S₅, Li₂S-SiS₂, LiI-Li₂S-SiS₂, LiI-Si₂S-P₂S₅, LiI-Li₂S-P₂O₅, or LiI-Li₃PO₄-P₂S₅.

### EXAMPLES

Examples of the disclosure will be described below, but the disclosure is not limited to the following Examples.

### [Example 1]

### < Preparation of Self-extinguishing Layer A and Self-extinguishing Layer B >

The following self-extinguishing layer A (thickness: 50 µm) and self-extinguishing layer B (thickness: 50 µm) were prepared.

Self-extinguishing layer A ... Polyphenylene sulfide (PPS) film.

Self-extinguishing layer B ... Layer composed of carboxymethyl cellulose (CMC) as a fuel (3 parts by mass), potassium chlorate as an oxidizing agent (7 parts by mass), tripotassium citrate as a fire extinguishing agent (150 parts by mass), and a binder (styrene-butadiene rubber (SBR)) (3 parts by mass).

The self-extinguishing layer B was formed on the self-extinguishing layer A.

In detail, the self-extinguishing layer B was formed by coating a slurry composed of components in the self-extinguishing layer B and water (solvent) on the self-extinguishing layer A, and then drying the slurry.

### < Preparation of Lithium-ion Battery >

The following cell X1 and cell X2 were prepared as lithium-ion batteries, respectively.

### (Cell XI)

- Laminated lithium-ion battery with a battery size of 59mm in length, 38mm in width, and 7mm in thickness.
- Battery capacity 2,035 mAh.
- Average voltage of 3.78 V.
- The structure of the cell X1 is the same as that of the lithium-ion battery 1 of the embodiment, except that the outer packaging 10 is not provided with the internal-extinguishing layer 14.
- The positive electrode, the separator, and the negative electrode in the battery element 50 were of a winding type. The number of turns was adjusted depending on the above-described battery capacity and the above-described battery size.
- For the electrolyte solution 60, a non-aqueous electrolyte solution containing 1 mol/L of LiPF₆ in a mixed solvent of ethylene carbonate (EC) (35% by volume), dimethyl carbonate (DMC) (35% by volume), and ethyl methyl carbonate (EMC) (30% by volume) was used.
- An outer packaging film to form the outer packaging 10 was prepared as follows.

After chemical conversion treatment was applied to both sides of a 40 µm thick aluminum foil (equivalent to the metal layer 12 in Fig. 4), a 25 µm thick stretched nylon film (equivalent to the gas barrier layer 13 in Fig. 4) was bonded to one of the chemical conversion treated surfaces using a two-component curing polyurethane adhesive by a dry laminating method, and a 50 µm thick polypropylene film (weight average molecular weight: 5,000,000) (equivalent to the toughness layer 15 in Fig. 4) was bonded to this nylon film in the same manner.

Next, a 30 µm thick polypropylene film (melting point: 110°C) (equivalent to the thermal adhesive layer 11 in Fig. 4) was attached to the other chemical conversion treated side of the aluminum foil using a two-component curing polyurethane adhesive to obtain an outer packaging film.

### (Cell X2)

- Laminated lithium-ion battery with a battery size of 60 mm long, 38 mm wide, and 5 mm thick.
- Battery capacity 1,034mAh.
- Average voltage 3.78V.
- The structure of the cell X2 was the same as that of the cell XI, except that the number of windings was changed depending on the battery capacity and the battery size.

### < Preparation of Lithium-ion Battery Stack >

The above-described cell XI, the above-described two self-extinguishing layers (that is, self-extinguishing layer A and self-extinguishing layer B), and the above-described cell X2 were bonded together via an isocyanate adhesive to produce a lithium-ion battery stack having a layered structure represented by "cell X1 / adhesive layer (thickness: 1 µm) / self-extinguishing layer A / self-extinguishing layer B / adhesive layer (thickness: 1 µm) / cell X2".

### < Nail Penetration Test >

A nail penetration test was conducted on the above-described lithium-ion battery stack as follows.

A steel nail with a diameter of 3 mm was penetrated into the cell X1 of the above-described lithium-ion battery stack in the direction of the thickness of the cell X1 (that is, in the direction of the thickness of the lithium-ion battery stack) to short-circuit the positive electrode and the negative electrode of the cell XI, and changes in the voltage and temperature of each cell were observed from the time when the penetration started.

The nail penetration conditions were set at a penetration speed of 3.0 mm/sec and a penetration depth of 50%.

The penetration depth of 50% refers to the condition in which a nail is penetrated to a depth of 50% of the total thickness of the cell X1 at the above-described penetration speed.

For the temperature of each cell, the temperature of the back surface of each cell (that is, the temperature of the surface opposite to the side where the nail was to be penetrated) was measured.

The voltage of each cell is the voltage between the positive electrode and the negative electrode in each cell.

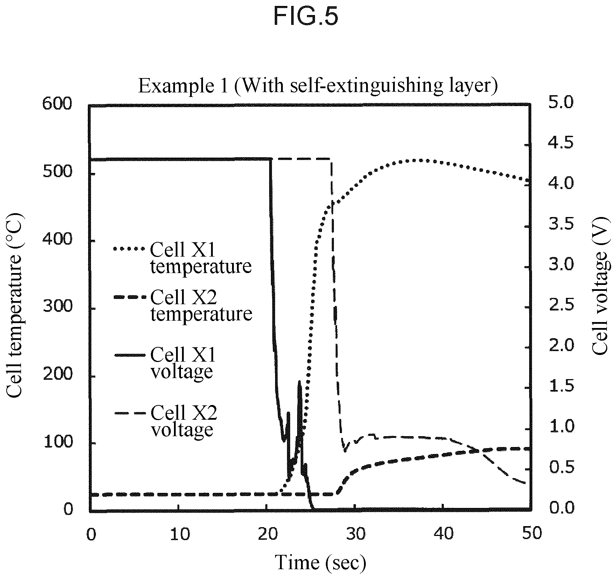

The results are shown in Fig. 5.

### [Comparative Example 1]

The same operation was performed as in Example 1, except that a lithium-ion battery stack having a layered structure represented by "cell X1 / adhesive layer (thickness: 1 µm) / cell X2" was prepared without using the self-extinguishing layer A and the self-extinguishing layer B, and a nail penetration test was performed on the prepared lithium-ion battery stack.

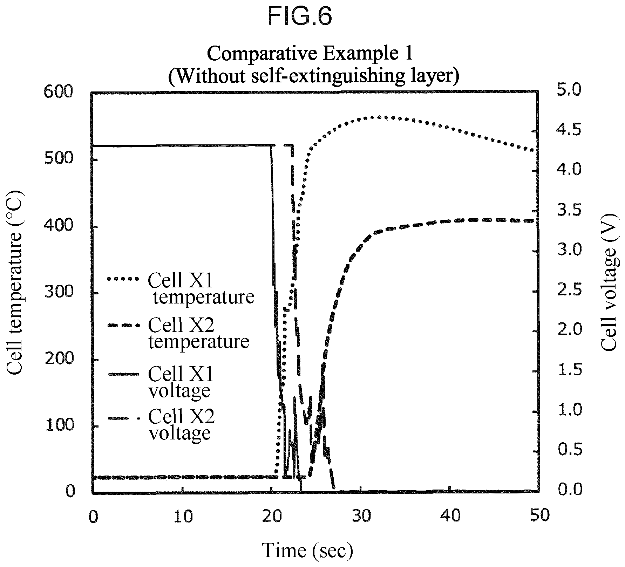

The results are shown in Fig. 6.

Fig. 5 is a graph illustrating the results of the nail penetration test in Example 1, and Fig. 6 is a graph illustrating the results of the nail penetration test in Comparative Example 1.

In Fig. 5 and Fig. 6, the horizontal axis indicates the elapsed time (sec (second)) from the start of nail penetration to the cell XI, where the start of nail penetration to the cell X1 is 0 sec (second), and the two vertical axes indicate the cell temperature and the cell voltage of each cell, respectively.

As illustrated in Fig. 6, in Comparative Example 1, in which no self-extinguishing layer was provided, a rapid temperature rise (that is, thermal runaway) of the cell X1 was observed from around 20 sec. In this Comparative Example 1, a rapid temperature rise (that is, thermal runaway) of a cell 2 was also observed from around 25 sec.

In contrast, as illustrated in Fig. 5, in Example 1 with self-extinguishing layers (that is, the self-extinguishing layer A and the self-extinguishing layer B), thermal runaway was observed for a cell 1 as in Comparative Example 1, but for a cell 2, thermal runaway was considerably suppressed.

From the results described above, the lithium-ion battery stack of Example 1 is expected to be effective in realizing initial fire extinguishing of lithium-ion batteries.

Furthermore, the lithium-ion battery stack of Example 1 is expected to have an effect of suppressing catching fires of a lithium-ion battery and suppressing ignition itself of a lithium-ion battery.

### [Example 101]

### < Preparation of Lithium-ion Battery Stack >

A lithium-ion battery stack having a layered structure represented by "cell X1 / adhesion layer (thickness: 1 µm) / self-extinguishing layer A / self-extinguishing layer B / adhesion layer (thickness: 1 µm) / cell X2" was prepared in the same manner as in Example 1, except that the thickness of the self-extinguishing layer B was changed to 200 µm.

### < Nail Penetration Test >

Using the above-described lithium-ion battery stack, a nail penetration test under the same conditions as the nail penetration test in Example 1 was conducted.

In Example 101, the nail penetration test was continued until the elapsed time from the start of nail penetration into the cell X1 was 15 minutes, and evaluation was performed based on the following evaluation criteria.

The results are shown in Table 1.

### - Evaluation Criteria -

A: Neither ignition nor temperature rise to 180°C or higher was observed in the cell X2.
B: In the cell X2, a temperature rise to 180°C or higher was observed, but no ignition was observed.
C: Ignition was observed in the cell X2.

### [Comparative Example 101]

The lithium-ion battery stack in Comparative Example 1 described above was evaluated using the same evaluation criteria as in Example 101.

The results are shown in Table 1.

### [Examples 102 to 110]

The same evaluation as in Example 101 was performed, except that the components and/or thickness of the self-extinguishing layer B were changed as shown in Table 1.

The results are shown in Table 1.

**[Table 1]**

| | Self-extinguishing layer A | | Self-extinguishing layer B | | | | | | | Nail penetration test evaluation result |
|---|---|---|---|---|---|---|---|---|---|---|
| | Material | Thickness (µm) | Material (component) (parts by mass) | | | | | | Thickness (µm) | |
| | | | Tripotassium citrate | Phosphoric acid ester | Phosphazene | Potassium chlorate | CMC | SBR | | |
| Example 101 | PPS | 50 | 150 | | | 7 | 3 | 3 | 200 | A |
| Example 102 | PPS | 50 | 150 | | | 7 | 3 | 3 | 500 | A |
| Example 103 | PPS | 50 | 150 | | | 7 | 3 | 3 | 800 | A |
| Example 104 | PPS | 50 | 150 | | | 7 | 3 | 3 | 1000 | A |
| Example 105 | PPS | 50 | | 20 | 70 | | 5 | 3 | 500 | A |
| Example 106 | PPS | 50 | | 20 | 70 | | 5 | 3 | 800 | A |
| Example 107 | PPS | 50 | | 20 | 70 | | 5 | 3 | 1000 | A |
| Example 108 | PPS | 50 | 120 | | | | 3 | 10 | 500 | A |
| Example 109 | PPS | 50 | 120 | | | | 3 | 10 | 800 | A |
| Example 110 | PPS | 50 | 120 | | | | 3 | 10 | 1000 | A |
| Comparative Example 101 | No self-extinguishing layer | | | | | | | | | C |

### -Description of Table 1

- A blank box means that the corresponding component is not contained.
- PPS, CMC, and SBR refer to polyphenylene sulfide, carboxymethyl cellulose, and styrene-butadiene rubber, respectively.

As shown in Table 1, in Examples 101 to 110, where a self-extinguishing layer was provided, no ignition was confirmed in the nail penetration test.

In contrast, in Comparative Example 101, where no self-extinguishing layer was provided, ignition was confirmed in the nail penetration test.

Based on the results described above, the lithium-ion battery stacks of Examples 101 to 110 are expected to have an effect of achieving initial fire extinguishing of lithium-ion batteries.

Furthermore, the lithium-ion battery stacks of Examples 101 to 110 are also expected to have an effect of suppressing catching fires of the lithium-ion battery and an effect of suppressing ignition itself of the lithium-ion battery.

The disclosure of Japanese Patent Application No. 2019-066266 filed on March 29, 2019 is hereby incorporated by reference in its entirety.

All Documents, Patent Applications, and technical standards described herein are incorporated by reference herein to the same extent as if each of the Documents, Patent Applications, and technical standards had been specifically and individually indicated to be incorporated by reference.

## Claims

1. A lithium-ion battery stack that is a layered body including: a plurality of lithium-ion batteries layered directly or with other layers therebetween; and one or more self-extinguishing layers.

2. The lithium-ion battery stack according to claim 1, wherein at least one of the one or more self-extinguishing layers is arranged between two adjacent lithium-ion batteries in the plurality of lithium-ion batteries.

3. The lithium-ion battery stack according to claim 1 or claim 2, wherein at least one of the one or more self-extinguishing layers has at least one of: a function of trapping radicals involved in combustion, a function of blocking a combustion supporting material, or a function of absorbing heat and diluting a combustion supporting material.

4. The lithium-ion battery stack according to any one of claims 1 to 3, wherein at least one of the one or more self-extinguishing layers has a shape retention property.

5. The lithium-ion battery stack according to any one of claims 1 to 4, wherein at least one of the one or more self-extinguishing layers has an adhesive property.

6. The lithium-ion battery stack according to any one of claims 1 to 5, wherein:
at least one of the one or more self-extinguishing layers is arranged between two adjacent lithium-ion batteries in the plurality of lithium-ion batteries, and
the layered body further includes an adhesive layer between at least one of the two adjacent lithium-ion batteries and a self-extinguishing layer arranged between the two adjacent lithium-ion batteries.

7. The lithium-ion battery stack according to any one of claims 1 to 6, wherein:
at least one of the one or more self-extinguishing layers is arranged between two adjacent lithium-ion batteries in the plurality of lithium-ion batteries, and
the layered body further includes a vibration-absorbing layer between at least one of the two adjacent lithium-ion batteries and a self-extinguishing layer arranged between the two adjacent lithium-ion batteries.

8. The lithium-ion battery stack according to any one of claims 1 to 7, wherein at least one of the plurality of lithium-ion batteries includes an internal-extinguishing layer.
